Europäisches Patentamt

European Patent Office

Office européen des brevets

(11) Veröffentlichungsnummer: **0 176 148**
A2

## (12) EUROPÄISCHE PATENTANMELDUNG

(21) Anmeldenummer: 85201492.7

(22) Anmeldetag: 18.09.85

(51) Int. Cl.⁴: **H 04 J 3/04**

(30) Priorität: 28.09.84 DE 3435652

(43) Veröffentlichungstag der Anmeldung:
02.04.86 Patentblatt 86/14

(84) Benannte Vertragsstaaten:
DE FR GB SE

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB SE

(72) Erfinder: Krüger, Johann
Alter Hof 3
D-2085 Quickborn(DE)

(72) Erfinder: Killat, Ulrich
Achter Lüttmoor 2c
D-2000 Hamburg 56(DE)

(74) Vertreter: Poddig, Dieter et al,
Philips Patentverwaltung GmbH Billstrasse 80 Postfach
10 51 49
D-2000 Hamburg 28(DE)

(54) Schaltungsanordnung zum Erzeugen eines Zeitmultiplexsignals.

(57) Bevor die Signale einer Anzahl Eingangsleitungen zu einem Zeitmultiplex zusammengefaßt werden können, müssen die Signale der Eingangsleitungen allgemein aufbereitet werden, so daß für jede Eingangsleitung eine Schaltung erforderlich ist, die Platz beansprucht, und eine größere Anzahl von Eingangsleitungen somit räumlich getrennt sind. Wenn die Signale der Eingangsleitungen durch entsprechend gesteuerte Abtastung sofort zu einem Zeitmultiplexsignal hoher Bitfrequenz zusammengefaßt werden, muß dieses Signal von Eingangsschaltung zu Eingangsschaltung durchgeschleift werden, was eine aufwendige Verdrahtung (allgemein Koaxialkabel) und sehr schnelle Abtastschalter erfordert. Erfindungsgemäß wird vorgeschlagen, dem Zeitmultiplexsignalausgang einen Parallel-Serien-Wandler vorzuschalten und diesem von den einzelnen Eingängen jeweils mehrere Bit parallel zuzuführen, was mit einer entsprechend niedrigeren Frequenz erfolgen kann. Dabei kann jeweils ein Bit mehrerer Eingangsleitungen übertragen werden, oder jede Eingangsleitung führt auf einen Serien-Parallel-Wandler, deren Inhalt parallel zum Parallel-Serien-Wandler übertragen wird. Auch Zwischenkombinationen davon sind möglich. Bei Zusammenfassung von jeweils mehreren Eingangsleitungen zu einer Multiplexstufe kann durch einen entsprechenden Dekoder darin eine einfache Adressensteuerung erreicht werden.

./...

Croydon Printing Company Ltd.

FIG.1

"Schaltungsanordnung zum Erzeugen eines Zeitmultiplexsignals"

Die Erfindung betrifft eine Schaltungsanordnung zum
Erzeugen eines Zeitmultiplexsignals an einem Signalausgang
aus den seriellen binären Eingangssignalen einer Anzahl
Eingangsleitungen mit Hilfe eines dem Signalausgang
vorgeschalteten Parallel-Serien-Wandlers, dessen
Paralleleingänge mit mindestens je einer Eingangsleitung
gekoppelt sind.

Eine derartige Schaltungsanordnung ist bekannt aus der
DE-OS 28 14 001 und dient dazu, die Eingangssignale von
vier Eingangsleitungen in einem Zeitmultiplex-Ausgangssignal zusammenzufassen, wobei außerdem jedem Eingangssignal noch Zusatzinformation zugefügt wird. Der
Parallel-Serien-Wandler hat dabei also vier parallele
Eingänge.

In manchen Fällen ist es jedoch erforderlich, eine größere
Anzahl von Eingangsleitungen zu einer Zeitmultiplexleitung
zusammenzufassen. In diesem Falle würde der Parallel-
Serien-Wandler am Ausgang sehr umfangreich und sehr teuer,
da er insgesamt seriell mit der Bitgeschwindigkeit der
Ausgangs-Zeitmultiplexleitung arbeiten muß. Außerdem
ergibt sich dann eine aufwendige Verdrahtung, da die
Eingangsleitungen häufig zu weiter entfernten Teilnehmerstellen führen und somit jeder Eingangsleitung eine
Schaltung zur Taktextrahierung, Impulsformung und Phasenanpassung an das Taktsignal der Vermittlungsanordnung
nachgeschaltet ist, und die so aufbereiteten Eingangssignale wegen des Platzbedarfs der den Eingangsleitungen
zugeordneten Schaltungen räumlich getrennt sind.

Aufgabe der Erfindung ist es, eine Schaltungsanordnung der eingangs genannten Art anzugeben, bei der auch bei einer großen Anzahl von Eingangsleitungen ein einfacher und kurzer Parallel-Serien-Wandler am Ausgang verwendet wird und eine einfach ausgeführte Verdrahtung möglich ist.

Diese Aufgabe wird erfindungsgemäß dadurch gelöst, daß jeder Paralleleingang des Parallel-Serien-Wandlers mit einer Anzahl Signalschalter verbunden ist, die unter zyklischer Steuerung durch eine Steuerschaltung eine Anzahl Eingangsleitungen nacheinander mit diesem Paralleleingang verbinden, wobei jeweils ein Signalschalter jedes Paralleleingangs gleichzeitig angesteuert wird.

Auf diese Weise ist die Anzahl der Paralleleingänge des Parallel-Serien-Wandlers unabhängig von der Anzahl der Eingangsleitungen und kann beispielsweise nach der gewünschten Bitgeschwindigkeit über die Signalschalter und deren Verbindungen mit dem Parallel-Serien-Wandler gewählt werden, die sich aus der Bitgeschwindigkeit auf der Zeitmultiplex-Ausgangsleitung geteilt durch die Anzahl der Paralleleingänge ergibt. Die Verdrahtung der Signalschalter kann in Form eines parallelen Datenbusses durchgeführt werden, der flexibel den Erfordernissen der Praxis angepaßt werden kann.

Die jeweils parallel übertragenen Bits können auf verschiedene Weise zusammengesetzt werden. Bei einer erfindungsgemäßen Schaltungsanordnung, bei der die Eingangsleitungen in untereinander gleich große Gruppe zusammengefaßt sind, ist die Anzahl der Eingangsleitungen je Gruppe gleich der Anzahl der Paralleleingänge des Parallel-Serien-Wandlers ist und die Paralleleingänge je ein Bit aller Eingangsleitungen einer Gruppe enthalten. Dadurch enthält das Zeitmultiplexsignal eine unmittelbare bitweise Verschachtelung aller Eingangssignale.

Gemäß einer anderen Ausgestaltung der Erfindung ist es zweckmäßig, daß jeder Eingangsleitung ein Serien-Parallel-Wandler nachgeschaltet ist, der eine Anzahl aufeinanderfolgender Bits der zugehörigen Eingangsleitung aufnimmt, und daß die Steuerschaltung zyklisch nacheinander die Serien-Parallel-Wandler adressiert und jeweils den Inhalt eines Serien-Parallel-Wandler gleichzeitig den Paralleleingängen des Parallel-Serien-Wandler zuführt. Dadurch wird ein Zeitmultiplexsignal erzeugt, in dem jeweils zusammenhängende Bitgruppen der einzelnen Eingangssignale zeitverschachtelt enthalten sind. Dies kann günstiger sein, wenn eine Raumschaltstufe nachgeschaltet ist, da diese dann die einzelnen durchzuschaltenden Matrixpunkte nicht so häufig umschalten muß, so daß für die Ansteuerung der Raumschaltstufe ein langsamerer Steuerspeicher verwendet werden kann. Die Bitgruppen, die dem Parallel-Serien-Wandler zugeführt werden, stellen dabei zweckmäßig jeweils ein Datenwort des Eingangssignals dar.

In einer weiteren Ausgestaltung der vorstehend beschriebenen Schaltungsanordnung, bei der die Eingangsleitungen in untereinander gleich große Gruppen zusammengefaßt sind, enthält zweckmäßigerweise die Steuerschaltung einen Adressengenerator, der zyklisch nacheinander eine Anzahl Adressen entsprechend der Anzahl Eingangsleitungen erzeugt, und ist jeder Gruppe von Eingangsleitungen ein Dekoder zugeordnet, der eine Anzahl frei wählbarer Adressen gleich der Anzahl Eingangsleitungen der Gruppen dekodiert und bei verschiedenen Adressen verschiedene Serien-Parallel-Wandler ansteuert. Auf diese Weise ergibt sich eine einfache Steuerung und Verdrahtung, wenn jeweils eine Gruppe von Eingangsleitungen in einer Baueinheit zusammengefaßt ist.

Um die notwendige Rahmensynchronisierinformation in einem Zeitmultiplexsignal an der richtigen Stelle einzufügen, ist es nach einer weiteren Ausgestaltung der Erfindung zweckmäßig, daß einer der Signalschalter mindestens eines Teils der Paralleleingänge mit Rahmensynchronisierinformation erzeugen Signalquellen verbunden sind. Dadurch wird die Rahmensynchronisierinformation als Eingangssignale mit vorgegebener Information behandelt und in gleicher Weise wie die übrigen Eingangssignale verarbeitet.

Ausführungsbeispiele der Erfindung werden nachstehend anhand der Zeichnung näher erläutert. Es zeigen

Fig. 1 ein Blockschaltbild der gesamten Schaltungsanordnung,

Fig. 2 ein Zeitdiagramm mit der zeitlichen Anordnung der einzelnen Bit der Eingangssignale im Zeitmultiplexsignal,

Fig. 3 das Blockschaltbild einer Ausführung einer Multiplexstufe in der Anordnung nach Fig. 1,

Fig. 4 das Blockschaltbild einer Steuerschaltung.

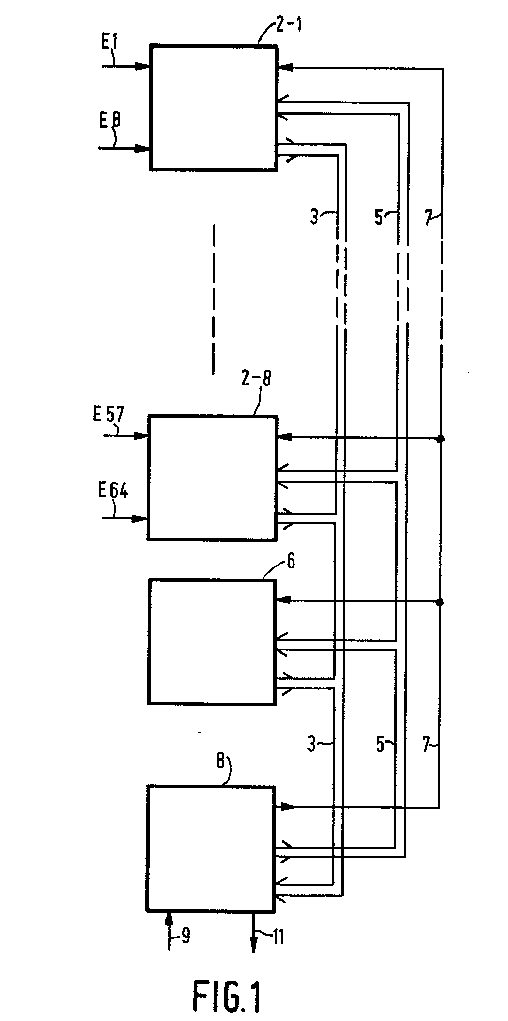

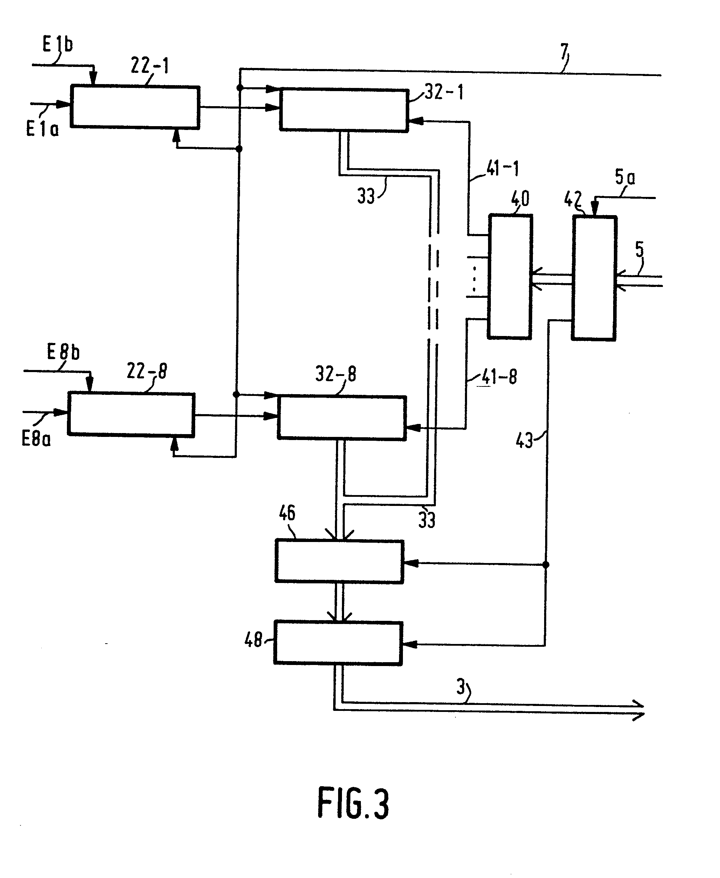

Die in Fig. 1 dargestellte Anordnung faßt die Eingangssignale von 64 Eingangsleitungen E1 bis E64 zu einem Zeitmultiplexsignal zusammen, das auf der den Signalausgang darstellenden Leitung 11 abgegeben wird. Jeweils acht Eingangsleitungen sind zu einer Gruppe zusammengefaßt und führen auf eine Multiplexstufe, d.h. die Eingangsleitungen E1 bis E8 führen auf die Multiplexstufe 2-1, und die Eingangsleitungen E57 bis E64 führen auf die Multiplexstufe 2-8, während die dazwischen liegenden Multiplexstufen für die übrigen Eingangsleitungen der Übersichtlichkeit halber nicht dargestellt sind. Ferner ist noch eine Multiplexanordnung 6 dargestellt, die jedoch keine Einganssignale empfängt, sondern Rahmensynchronisiersignale erzeugt.

Die einzelnen Multiplexstufen 2-1 bis 2-8 und 6 weisen außer den Eingangsleitungen noch weitere Anschlüsse auf, die über drei Verbindungen 3, 5 und 7 miteinander und mit Anschlüssen einer Steuerschaltung 8 verbunden sind. Die Verbindung 3 enthält acht Leitungen, über die acht Bit parallel von einer der Multiplexstufen 2-1 bis 2-8 oder 6 der Steuerschaltung 8 zugeführt werden. Die Verbindung 5 enthält ebenfalls eine Anzahl Leitungen, über die parallel von der Steuerschaltung 8 den Multiplexstufen 2-1 bis 2-8 und 6 kodierte Adressensignale zugeführt werden. Über die Verbindung 7, die hier aus einer Leitung bestehen kann, führt die Steuerschaltung 8 den Multiplexstufen 2-1 bis 2-8 und 6 ein Taktsignal mit einer Frequenz entsprechend der mittleren Frequenz der Bits auf jeweils einer der Eingangsleitungen E1 bis E-64 zu. Dieses Signal wird dafür benötigt, Phasenschwankungen der Eingangssignale auszugleichen und die Eingangssignale an das Taktraster der Anordnung anzupassen, wie später erläutert wird. Die Steuerschaltung 8 erhält ferner über die Leitung 9 ein Taktsignal entsprechend der Bitgeschwindigkeit des Zeitmultiplexsignals auf der Leitung 11, und aus diesem Taktsignal auf der Leitung 9 werden das Taktsignal auf der Leitung 7 sowie die Adressensignale auf der Verbindung 5 erzeugt. Ferner dient es zur Parallel-Serien-Wandlung der über die Verbindung 3 zugeführten Bitgruppen.

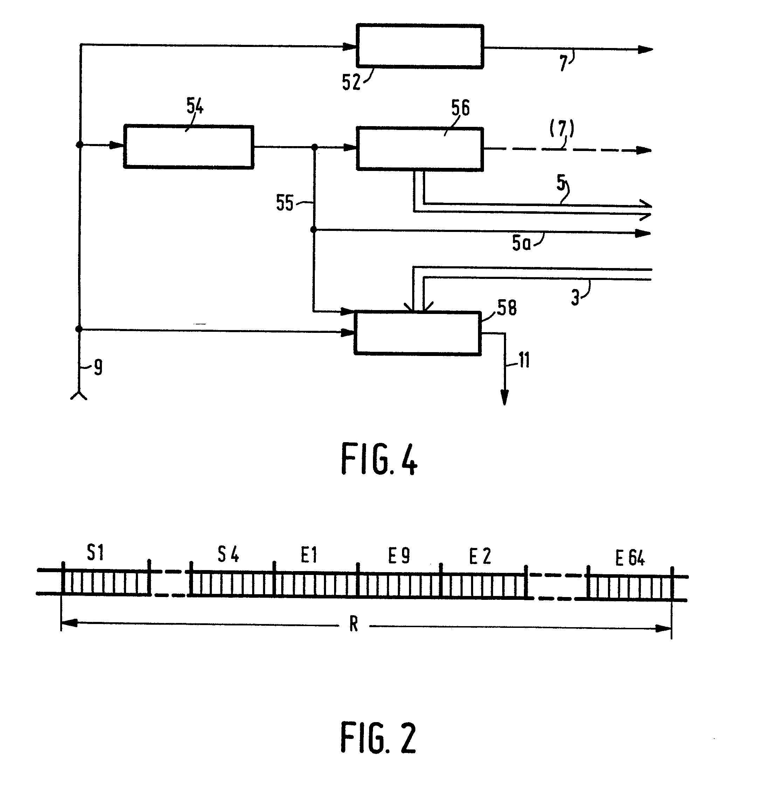

In Fig. 2 ist ein Beispiel für eine zeitliche Folge der Zeitmultiplexsignale auf der den Signalausgang darstellenden Leitung 11 in Fig. 1 angegeben. Dabei ist nur ein Zeitrahmen R dargestellt, der sich zyklisch unmittelbar aufeinanderfolgend wiederholt.

Zu Beginn jedes Rahmens treten vier Synchronisierwörter S1 bis S4 auf, von denen nur das erste und letzte angedeutet ist. Diese Synchronisierwörter aus jeweils acht Bit werden

0176148

von der Multiplexstufe 6 in Fig. 1 durch entsprechende Adressierung von der Steuerschaltung 8 erzeugt. Als nächstes werden acht Bit des Eingangssignals der Eingangsleitung E1 abgegeben, dann acht Bit der Eingangsleitung E9, die zur zweiten Gruppe gehört, dann wieder acht Bit der Eingangsleitung E2 der ersten Gruppe usw., wobei durch diesen gruppenweisen Versatz die Anforderungen an die Schaltgeschwindigkeit der Elemente weiter verringert wird, bis von jeder Eingangsleitung einschließlich der Eingangsleitung E64 jeweils acht Bit aufgetreten sind. Damit ist ein Rahmen beendet, der damit insgesamt 544 Bit umfaßt. Wenn beispielweise auf den Eingangsleitungen E1 bis E64 die Eingangssignale jeweils mit einer Bitfrequenz von 2,048 MHz auftreten, beträgt die Rahmenwiederholfrequenz den achten Teil davon, d.h. 258 KHz, da jeweils acht Bit der Eingangssignale übertragen werden. Die Bitfrequenz innerhalb des Rahmens, d.h. im Zeitmultiplexsignal auf der Leitung 11, beträgt dagegen 68 x 2,048 MHz = 139,246 MHz, da darin 68 Kanäle mit jeweils der Bitfrequenz der Eingangssignale enthalten sind. Es ist klar, daß die Anzahl der Bits jedes Eingangssignals, die zusammen übertragen werden, auch anders gewählt werden kann, wodurch sich dann die Rahmenwiederholfrequenz entsprechend ändert. Im Grenzfall kann von jeder Eingangsleitung jeweils nur ein Bit innerhalb eines Rahmens übertragen werden. Ebenso kann die Reihenfolge der Eingangsleitungen, von denen aufeinanderfolgend Eingangssignale zum Signalausgang übertragen werden, anders gewählt werden, wie später erläutert wird.

Bei der in Fig. 3 dargestellten Ausführung einer Multiplexstufe wird angenommen, daß jedes Eingangssignal bereits in an sich bekannter Weise regeneriert und daraus das zugehörige Taktsigal extrahiert worden ist. Das regenerierte Datensignal der Eingangssignal E1 wird über die Leitung E1a dem Signaleingang eines Pufferspeichers 22-1 zugeführt und in diesen mit dem Taktsignal auf der Leitung E1b eingeschrieben. Die Kapazität dieses Speichers hängt ab von der Größe der Phasenschwankungen, die beim Eingangssignal maximal zu erwarten sind. Dies gilt in entsprechender Weise auch für die anderen Eingangsleitungen, von denen der Einfachheit halber nur die Leitungen E8a und E8b für das regenerierte Daten- und Taktsignal sowie die Pufferstufe 22-8 dargestellt ist.

Jede Pufferstufe 22-1 bis 22-8 erhält das Taktsignal auf der Leitung 7, das hier mit Bittakt bezeichnet ist, und mit jedem Bittakt wird der jeweils älteste Inhalt der Pufferspeicher 22-1 bis 22-8 ausgelesen und einem zugeordneten Schieberegister 32-1 bis 32-8 zugeführt und darin eingeschrieben. Im angenommenen Beispiel enthält jedes Schieberegister 32-1 bis 32-8 eine Anzahl von acht Stufen zur Aufnahme von acht Bit jedes Eingangssignals und stellt eien Serien-Parallel-Wandler dar.

Über die Leitung 5 werden von der Steuerschaltung 8 in Fig. 1 erzeugte kodierte Adressensignale den Adressiereingängen eines Speichers 42 zugeführt, der an jeder Adresse ein Vier-Bit-Wort enthält und dieses abgibt, wenn über die Leitung 5a ein ebenfalls von der Steuerschaltung 8 erzeugtes Gültigkeitssignal für die Adressen zugeführt wird. Von dem Vier-Bit-Wort des Speichers 42 enthalten drei Bit die kodierte Adresse einer der acht Eingangsleitungen und werden einem Dekoder 40 zugeführt, der für jede Bitkombination der drei zugeführten Bit eine andere von acht Ausgangsleitungen 41-1 bis 41-8 erregt, die jeweils auf ein Schieberegister 32-1 bis 32-8 führen. Wenn beispielsweise die Leitung 41-1 erregt wird, wird der Inhalt des Schieberegisters 32-1 auf eine Verbindung 33 durchgeschaltet, die acht Leitungen enthält und auf ein

Auffangregister 46 führt, in die die entsprechenden acht Bit durch ein Signal auf der Leitung 43 eingeschrieben werden, das durch das vierte Bit im ausgegebenen Wort des Speichers 42 gebildet wird. Dadurch wird berücksichtigt, daß nicht bei jeder über die Verbindung 5 zugeführten Adresse ein Acht-Bit-Wort aus einem Schieberegister 32-n ausgelesen werden darf, weil die einzelnen Multiplexstufen 2-1 bis 2-8 und 6 in Fig. 1 zu verschiedenen Zeiten ein Acht-Bit-Wort abgeben müssen. Die Reihenfolge der Abtastung der Schieberegister 32-1 bis 32-8 und damit die Reihenfolge der Acht-Bit-Gruppen im Zeitmultiplex-Signal wird also durch den Inhalt des Speichers 42 bestimmt. Dieser Speicher 42 kann in jeder Multiplexstufe 2-1 bis 2-8 und 6 ein Festwertspeicher sein, wobei die Festwertspeicher der einzelnen Multiplexstufen unterschiedlichen Inhalt haben.

Es ist jedoch auch grundsätzlich möglich, für die Speicher 42 veränderbare Speicher zu verwenden und deren Inhalt von der durchzuschaltenden Verbindung abhängig zu machen. Auch ist es möglich, daß der Dekoder 40 jeweils mehrere Schieberegister 32-n ansteuert, beispielsweise jeweils zwei Schieberegister die dann jeweils vier Bit auf zwei getrennten Verbindungen dem Register 46 zuführen, wo diese zu einem acht Bit-Wort zusammengesetzt werden. Im Extremfall braucht der Speicher 42 nur bei einer einzigen Adresse ein einziges Signal abzugeben, das alle acht Schieberegister 32-1 bis 32-8 gleichzeitig ansteuert und von jedem nur ein Bit auf getrennten Leitungen dem Register 46 zuführt. Dies ergibt die bereits erwähnte vollständige bitweise Verschachtelung der Eingangssignale im Zeitmultiplexsignal.

Der Ausgang des Registers 46 führt auf eine Treiber-stufe 48, deren Ausgang mit der Verbindung 3 verbunden ist und dieser während des Anliegens der betreffenden Adresse den Inhalt des Registers 46 zuführt.

Die Multiplexstufe 6 ist ähnlich aufgebaut wie die in
Fig. 3 dargestellte Anordnung, insbesondere was die
Adressendekodierung betrifft, jedoch können die Schieberegister 32-n durch Schalter ersetzt werden, denen ein
festes Bitmuster zugeführt wird, wenn die Rahmensynchronisierwörter in jedem Rahmen gleich sind. Anderenfalls
müssen den Schaltern Speicher vorgeschaltet werden, wenn
die Synchronisierwörter zyklisch über mehrere Rahmen
wechseln. Die von den Schaltern bei Erregung der entsprechenden Leitung 41-n durchgeschalteten Signale werden
dann in gleicher Weise über das Register 46 und den
Treiber 48 der Verbindung 3 zugeführt.

Die von den Multiplexstufen 2-1 bis 2-8 und 6 über die
Verbindung 3 parallel abgegebenen Bits werden dem
parallelen Setzeingang eines Schieberegisters 58 zugeführt, das in der in Fig. 4 dargestellten Steuerschaltung
enthalten ist. Diese enthält ferner einen vorzugsweise als
Zähler ausgeführten Taktfrequenzuntersetzer 52, der die
Frequenz des über die Leitung 9 zugeführten Zeitmultiplextaktsignals durch die Anzahl der Kanäle insgesamt,
d.h. der Anzahl der Eingangsleitungen E1 bis E64 und der
Anzahl der von der Multiplexstufe 6 erzeugten Synchronisierwörter teilt und über den Ausgang 7 als Bittaktsignal
der Eingangssignale abgibt. Außerdem ist ein Zähler 54
vorgesehen, der nach jeweils acht Takten des Taktsignals
auf der Leitung 9, d.h. nach jeweils der über die
Verbindung 3 zugeführten Anzahl Bits ein neues Datenwort
von der Verbindung 3 in das Schieberegister 58 übernimmt.
Dieses übernommene Wort wird in dem Schieberegister 58 mit
dem Taktsignal auf der Leitung 9 durchgeschoben, und der
Inhalt des Schieberegisters 58 erscheint nacheinander auf
der Leitung 11. Das Schieberegister 58 arbeitet somit als
Parallel-Serien-Wandler.

Das Ausgangssignal des Zählers 54 auf der Leitung 55 wird ferner einem weiteren Zähler 56 zugeführt, der zyklisch so viele Stellungen durchläuft wie Kanäle insgesamt vorhanden sind, d.h. im vorliegenden Falle 68 Stellungen. Die Stellungen des Zählers 56 werden über die Verbindung 5 abgegeben und den Multiplexstufen 2-1 bis 2-8 und 6 zugeführt, zusammen mit dem Eingangssignal des Zählers 56, das über die Leitung 5a herausgeführt ist. Jeweils eine bestimmte Stellung des Zählers 56 ist einer bestimmten Eingangsleitung E1 bis E64 oder einem Synchronisierwort zugeordnet, und der Zähler 56 führt in jedem Rahmen gerade einen vollständigen Durchlauf aus. Der Zähler 56 weist daher einen Eingang für ein Rücksetzsignal auf, über das er in seine Anfangsstellung gesetzt werden kann, damit er und damit die Rahmenstruktur des über die Leitung 11 abgegebenen Zeitmultiplexsignals mit gegebenenfalls anderen entsprechenden Schaltungsanordnungen für weitere Eingangsleitungen, die in einer Vermittlungsanlage vorhanden sein können, synchronisiert werden kann. Im übrigen ist es auch möglich, die Zähler 52 und 56 zusammenzufassen, indem das Bittaktsignal 7 beispielsweise durch Dekodierung entsprechender Stellungen des Zählers 56 abgeleitet wird. Beim beschriebenen Beispiel ist dafür die Verknüpfung von nur zwei Ausgängen des Zählers erforderlich.

Es ist ersichtlich, daß die gleiche Anordnung wie vorstehend beschrieben, jedoch mit umgekehrter Signalrichtung, auch zum Demultiplexen eines Zeitmultiplexsignals verwendet werden kann. Dazu wird das Zeitmultiplex-Signal dann in der entsprechenden Steuerschaltung einem Serien-Parallel-Wandler zugeführt, der eine Anzahl aufeinanderfolgender Bits des Zeitmultiplexsignals parallel abgibt und Parallel-Serien-Wandlern in den einzelnen Demultiplexerstufen zuführt. Die Adressensteuerung erfolgt im übrigen in völlig gleicher Weise, wobei lediglich in der Steuerschaltung noch eine Anordnung zur Erkennung der Rahmensynchronisierwörter erforderlich ist, die den Adressenzähler entsprechend dem Zähler 56 in Fig. 4 und auch den Bitzähler entsprechend dem Zähler 54 in Fig. 4 auf eine Anfangsstellung zurücksetzt. Auch hierbei tritt der Vorteil auf, daß den einzelnen Demultiplexstufen nur Signale mit einer Frequenz zugeführt werden, die wesentlich niedriger als die Bitfrequenz des Zeitmultiplexsignals ist.

0176148

PATENTANSPRÜCHE

1.    Schaltungsanordnung zum Erzeugen eines Zeitmultiplexsignals an einem Signalausgang aus den seriellen binären Eingangssignalen einer Anzahl Eingangsleitungen mit Hilfe eines dem Signalausgang vorgeschalteten Parallel-Serien-Wandlers, dessen Paralleleingänge mit mindestens je einer Eingangsleitung gekoppelt ist, dadurch gekennzeichnet, daß jeder Paralleleingang (3) des Parallel-Serien-Wandlers (58) mit einer Anzahl Signalschalter (32-1 bis 32-8) verbunden ist, die unter zyklischer Steuerung durch eine Steuerschaltung (8) eine Anzahl Eingangsleitungen (E1, E9...) nacheinander mit diesem Paralleleingang (3) verbinden, wobei jeweils ein Signalschalter (32) jedes Paralleleingangs (3) gleichzeitig angesteuert wird.

2.    Schaltungsanordnung nach Anspruch 1, bei der die Eingangsleitungen in untereinander gleich große Gruppen zusammengefaßt sind, dadurch gekennzeichnet, daß die Anzahl der Eingangsleitungen (E1 bis E64) je Gruppe (2-1 bis 2-8) gleich der Anzahl der Paralleleingänge (3) des Parallel-Serien-Wandlers (58) ist und die Paralleleingänge (3) je ein Bit aller Eingangsleitungen (E1 bis E8) einer Gruppe enthalten.

3.    Schaltungsanordnung nach Anspruch 1, dadurch gekennzeichnet, daß jeder Eingangsleitung (E1 bis E64) ein Serien-Parallel-Wandler (32-1 bis 32-8) nachgeschaltet ist, der eine Anzahl aufeinanderfolgender Bits der zugehörigen Eingangsleitung aufnimmt, und daß die Steuerschaltung (8) zyklisch nacheinander die Serien-Parallel-Wandler (32-1 bis 32-8) adressiert und jeweils den Inhalt eines Serien-Parallel-Wandlers (z.B. 32-1) gleichzeitig den Paralleleingängen (3) des Parallel-Serien-Wandlers (58) zuführt.

4.   Schaltungsanordnung nach Anspruch 3, bei der die Eingangsleitungen in untereinander gleich große Gruppen zusammengefaßt sind,
dadurch gekennzeichnet, daß die Steuerschaltung (8) einen Adressengenerator (56) enthält, der zyklisch nacheinander eine Anzahl Adressen entsprechend der Anzahl Eingangsleitungen (E1 bis E64) erzeugt, und daß jeder Gruppe (2-1 bis 2-8) von Eingangsleitungen ein Dekoder (40, 42) zugeordnet ist, der eine Anzahl frei wählbarer Adressen gleich der Anzahl Eingangsleitungen (z.B. E1 bis E8) der Gruppen (z.B. 2-1) dekodiert und bei verschiedenen Adressen verschiedene Serien-Parallel-Wandler (32-1 bis 32-8) ansteuert.

5.   Schaltungsanordnung nach Anspruch 1 oder einem der folgenden,
dadurch gekennzeichnet, daß einer der Signalschalter mindestens eines Teils der Paralleleingänge (3) mit Rahmensynchronisierinformation erzeugenden Signalquellen (6) verbunden sind.

FIG.1

0176148

1-Ⅲ-PHD  84-140

0176148

FIG.3

0176148

FIG. 4

FIG. 2